# EUROPÄISCHE PATENTSCHRIFT

(11) **EP 2 255 103 B1**
(45) Veröffentlichungstag und Bekanntmachung des Hinweises auf die Patenterteilung: **31.10.2018**
(21) Anmeldenummer: 09722610.4
(22) Anmeldetag: 19.03.2009
(51) Int. Cl.: F16F 9/46

(54) **SCHWINGUNGSDÄMPFER MIT RUCKSACKVENTIL**
OSCILLATION DAMPER HAVING BACKPACK VALVE
AMORTISSEUR DE VIBRATIONS COMPORTANT UNE SOUPAPE ATTACHÉE AU TUBE D'AMORTISSEUR

(30) Priorität: 20.03.2008 DE 102008015412
(43) Veröffentlichungstag der Anmeldung: 01.12.2010
(73) Patentinhaber: ThyssenKrupp Bilstein GmbH, 58256 Ennepetal (DE)
(72) Erfinder: HAMERS, Wolfgang, 52428 Jülich (DE); KREFELD, Andreas, 40593 Düsseldorf (DE)
(74) Vertreter: thyssenkrupp Intellectual Property GmbH
(86) Internationale Anmeldenummer: PCT/EP2009/002026
(87) Internationale Veröffentlichungsnummer: WO 2009/115328

(56) Entgegenhaltungen:
- DE-A1- 4 445 705
- DE-A1- 19 731 138
- US-A- 5 735 372

## Beschreibung

Die Erfindung betrifft einen Schwingungsdämpfer mit den Merkmalen des Oberbegriffes des Patentanspruchs 1.

Ein derartiger Schwingungsdämpfer ist beispielsweise aus der Druckschrift EP 1 538 366 A1 bekannt. Bei diesem bekannten Schwingungsdämpfer sind zwei hydraulisch parallel zum Arbeitskolben angeordnete elektromagnetische Stellventile vorgesehen, von denen eines nur bei einer Einfahrbewegung der Kolbenstange und das andere nur bei einer Ausfahrbewegung der Kolbenstange durchströmt wird. Die elektromagnetischen Stellventile sind als so genannte Rucksackventile ausgebildet, das heißt sie sind in Gehäusen angeordnet, die an das Dämpferrohr des Schwingungsdämpfers angeflanscht sind.

Durch die beiden elektromagnetischen Stellventile kann die Dämpfkraft kontinuierlich verändert werden. Auf diese Weise können bei dem bekannten Schwingungsdämpfer die Dämpfungskräfte in der Zugstufe und in der Druckstufe des Schwingungsdämpfers unabhängig voneinander kontinuierlich verändert werden. Nachteilig bei diesem bekannten Schwingungsdämpfer ist, dass für beide Dämpfungsventile jeweils zwei Anschlussbohrungen erforderlich sind, um die erforderliche Zuströmung und Abströmung der Dämpfungsflüssigkeit zu gewährleisten. Dadurch sind insgesamt vier Anschlussbohrungen in das Dämpferrohr einzubringen, was fertigungstechnisch aufwändig ist und eine Schwächung des Dämpferrohres mit sich bringt. Darüber hinaus sind bei dem bekannten Schwingungsdämpfer zwei unabhängige Gehäuse vorgesehen, wobei in jedem Gehäuse ein Dämpfungsventil angeordnet ist. Durch die Anordnung von zwei Dämpfungsventilen in separaten Gehäusen auf dem Außenumfang des Dämpferrohres beansprucht der Schwingungsdämpfer insgesamt einen erheblichen Bauraum, der den Fahrwerkskonstrukteuren nicht bei allen Fahrzeugen zur Verfügung steht. Die Einsetzbarkeit des bekannten Schwingungsdämpfers ist daher eingeschränkt.

In der DE 44 45 705 A1 wird ein Schwingungsdämpfer mit verstellbarer Dämpfkraft beschrieben, bei dem für jede Bewegungsrichtung der Kolbenstange lediglich vier diskrete Dämpfungskennlinien realisiert werden können. Eine kontinuierliche Dämpfkraftveränderung ist nicht möglich. Zur Realisierung der vier Dämpfungskennlinien sind als elektromagnetische Schaltventile ausgebildete Aktuatoren vorgesehen, durch die in der Zug- und in der Druckstufe wirksame passive Dämpfungsventile zu- oder abgeschaltet werden können. Damit dieses Ventilsystem funktioniert und die beschriebenen vier Dämpfungskennlinien in Zug- und in Druckrichtung der Kolbenstangenbewegung eingestellt werden können, müssen in beiden Bewegungsrichtungen der Kolbenstange stets beide passiven Dämpfungsventile durchströmt werden, d.h. es werden immer beide Aktuatoren und Dämpfungsventile durch die Dämfungsflüssigkeit beaufschlagt. Eine Beaufschlagung z.B. des nur in der Zugstufe wirksamen passiven Dämpfungsventils bei einer Bewegung der Kolbenstange in Zugrichtung ist nicht vorgesehen, weil sich dadurch die erwünschten vier Dämpfungskennlinien nicht realisieren lassen würden. Gleiches gilt analog für die Druckstufe.

Der Erfindung liegt die Aufgabe zu Grunde, einen Schwingungsdämpfer mit den Merkmalen des Oberbegriffs des Patentanspruchs 1 derart weiterzubilden, dass die vorstehend dargelegten Nachteile vermieden werden.

Diese Aufgabe wird gelöst durch einen Schwingungsdämpfer mit den Merkmalen des Patentanspruchs 1. Vorteilhafte Weiterbildungen sind in den Unteransprüchen angegeben.

Erfindungsgemäß ist vorgesehen, dass beide Dämpfungsventile in einem gemeinsamen Gehäuse mit einem ersten und einem zweiten Hydraulikraum angeordnet sind, dass der erste Hydraulikraum über eine erste Bohrung mit dem kolbenstangenfernen Arbeitsraum und der zweite Hydraulikraum über eine zweite Bohrung mit dem kolbenstangenseitigen Arbeitsraum verbunden ist, und dass ein Strömungsführungselement vorgesehen ist, durch welches die beiden Hydraulikräume voneinander derart getrennt sind, dass die in den ersten Hydraulikraum bei einer Einfahrbewegung der Kolbenstange einströmende Dämpfungsflüssigkeit dem ersten Dämpfungsventil in Ventildurchströmungsrichtung zugeleitet wird, und die bei einer Ausfahrbewegung der Kolbenstange in den zweiten Hydraulikraum einströmende Dämpfungsflüssigkeit dem zweiten Dämpfungsventil in Ventildurchströmungsrichtung zugeleitet wird.

Durch die erfindungsgemäße Anordnung der Dämpfungsventile in einem einzigen Gehäuse wird im Vergleich zu der aus der EP 1 538 366 A1 bekannten Lösung ein erheblich geringerer Bauraum für die Unterbringung des Schwingungsdämpfers benötigt. Dadurch ist es möglich, den erfindungsgemäßen Schwingungsdämpfer in Fahrzeugen einzusetzen, in denen bislang Schwingungsdämpfer mit nur einem einzigen Rucksackventil eingesetzt worden sind. Bei Fahrzeugfahrwerken, die nur einen geringen Bauraum für die Unterbringung des Schwingungsdämpfers zur Verfügung stellen, kann durch die erfindungsgemäße Anordnung der beiden Dämpfungsventile in einem einzigen Gehäuse trotz des geringen Bauraums eine separate Dämpfungsverstellung in der Zugstufe und in der Druckstufe des Schwingungsdämpfers gewährleistet werden.

Vorteilhaft ist weiterhin, dass bei dem erfindungsgemäßen Schwingungsdämpfer lediglich zwei Anschlussbohrungen erforderlich sind, um das Gehäuse an den Dämpferrohrinnenraum anzuschließen. Der Anschluss des erfindungsgemäßen Gehäuses an den Dämpferrohr Innenraum ist bei der Erfindung deswegen lediglich über zwei Anschlussbohrungen möglich, weil wegen der Anordnung des Strömungsführungselementes bei einer Einfahrbewegung der Kolbenstange der erste Hydraulikraum einen Zuströmraum und der zweite Hydraulikraum einen Abströmraum für die Dämpfungsflüssigkeit bildet. Analog sorgt die Anordnung des Strömungsführungselementes dafür, dass bei einer Ausfahrbewegung der Kolbenstange der zweite Hydraulikraum einen Zuströmraum und der erste Hydraulikraum einen Abströmraum für die Dämpfungsflüssigkeit bildet. Beide Hydraulikräume können somit bei dem erfindungsgemäßen Schwingungsdämpfer grundsätzlich sowohl Abströmraum als auch Zuströmraum sein, je nachdem, in welche Bewegungsrichtung sich die Kolbenstange und der daran befestigte Arbeitskolben bewegt (Zugrichtung oder Druckrichtung).

Erfindungsgemäß sind die Dämpfungsventile vorzugsweise als elektromagnetisch betätigbare, kontinuierlich verstellbare Stellventile ausgebildet. Der grundsätzliche Aufbau derartiger Dämpfungsventile ist bereits aus der eingangs erwähnten EP 1 538 366 A1 bekannt. Diese Dämpfungsventile müssen von der Dämpfungsflüssigkeit mittig zentral angeströmt werden. Diese zentrale mittige Anströmung der Dämpfungsventile wird durch das erfindungsgemäße Strömungsführungselement für beide Ventile, das heißt für beide Bewegungsrichtungen der Kolbenstange, gewährleistet.

Bei den kontinuierlich verstellbaren Dämpfungsventilen wird die Dämpfkraft dadurch erzeugt, dass der hohlzylindrische Stellschieber entlang seiner Längsachse auf dem zylindrischen Teil des durchströmbaren Umlenkelementes, mit dem der Stellschieber zusammenwirkt, verschoben wird. Durch die axiale Verschiebung des Stellschiebers wird eine in dem zylindrischen Teil des Umlenkelementes angeordnete Drosselungsöffnung mehr oder weniger weit frei gegeben, so dass diese Drosselöffnung je nach Stellung des Stellschiebers einen bestimmten Strömungswiderstand für die Dämpfungsflüssigkeit bietet. Grundsätzlich reicht es bei dem erfindungsgemäßen Schwingungsdämpfer aus, ausschließlich die kontinuierlich verstellbaren Dämpfungsventile vorzusehen. Um eine den Anforderungen an den Fahrkomfort gerecht werdende Dämpfung zu erreichen kann es jedoch sinnvoll sein, hydraulisch vor das aktive (verstellbare) Ventilelement, das durch den Stellschieber und den zylindrischen Teil des Umlenkelementes gebildet wird, noch ein zusätzliches passives Ventilelement in den Strömungsweg zu schalten. Je nach Auslegung dieses zusätzlichen passiven Ventilelementes kann der Dämpfkraftverlauf gezielt beeinflusst und z.B an spezielle Herstellervorgaben oder -wünsche angepasst werden.

Das Strömungsführungselement kann grundsätzlich aus unterschiedlichen Materialien hergestellt werden. Eine kostengünstige Herstellung ist möglich, wenn das Strömungsführungselement als Blechpressteil oder als Sinterbauteil ausgebildet ist. Es ist jedoch auch möglich, das Strömungsführungselement aus Kunststoff herzustellen. In diesem Fall bietet sich das Kunststoffspritzgussverfahren zur Herstellung des Strömungsführungselementes an.

Gemäß einer bevorzugten Ausführungsform der Erfindung ist das Gehäuse, indem die Dämpfungsventile angeordnet sind, zylindrisch ausgebildet. In diesem Fall ist es besonders einfach möglich, die Dämpfungsventile koaxial zueinander in dem Gehäuse anzuordnen, und auch das kreisschreibenförmige Strömungsführungselement kann auf einfache koaxial zu den Dämpfungsventilen und zwischen denselben angeordnet werden.

Um die gesamte Anordnung aus den beiden Dämpfungsventilen und dem dazwischen angeordneten Strömungsführungselement sicher und fest in dem Gehäuse anordnen zu können kann das Gehäuse einen radial nach ihnen vorstehenden Absatz aufweisen, an dem sich das Strömungsführungselement abstützt. Um den ersten Hydraulikraum gegenüber dem zweiten Hydraulikraum abzudichten kann vorteilhaft zwischen dem radialen Absatz des Gehäuses und dem Strömungsführungselement eine Dichtung angeordnet sein. Diese Dichtung kann als einfache O-Ring Dichtung ausgebildet sein.

Alternativ kann auf den radialen Absatz jedoch auch verzichtet und das Strömungsführungselement an seinem Außenumfang gegen die zylindrische Innenwand des Gehäuses abgedichtet werden.

Gemäß der voranstehend beschriebenen Ausführungsform der Erfindung hat das Strömungsführungselement lediglich die Aufgabe, die Dämpfungsflüssigkeit dem jeweiligen Dämpfungsventil zuzuleiten, ohne dass beim Durchströmen des Strömungsführungselements eine Dämpfungskraft erzeugt wird. Nach einer anderen Ausführungsform der Erfindung ist dagegen vorgesehen, dass bereits das Strömungsführungselement mit Druckbegrenzungsventilen bestückt ist, die den hydraulisch parallel zum Arbeitskolben angeordneten Dämpfungsventilen in Durchströmungsrichtung gesehen hydraulisch vorgeschaltet sind. Somit weist das Strömungsführungselement eine Doppelfunktion auf, einerseits leitet es die Dämpfungsflüssigkeit dem jeweiligen Dämpfungsventil zu, andererseits erzeugt es selbst eine die Dämpfungskennung beeinflussende Dämpfkraft. Hierzu ist vorgesehen, dass das Strömungsführungselement mindestens zwei Kanäle zur Durchströmung mit Dämpfungsflüssigkeit aufweist und dass an dem Strömungsführungselement Druckbegrenzungsventile angeordnet sind, wobei das eine Druckbegrenzungsventil von durch den einen Kanal und das andere Druckbegrenzungsventil von durch den anderen Kanal strömender Dämpfungsflüssigkeit beaufschlagbar ist. Bevorzugt sind die an dem Strömungsführungselement angeordneten Druckbegrenzungsventile als Scheibenventile, insbesondere vorgespannte Scheibenventile ausgebildet.

Gemäß einer bevorzugten Ausführungsform der Erfindung weist jedes der Dämpfungsventile ein passives Ventilelement in Form eines Druckbegrenzungsventils auf, und die zusätzlichen, an dem Strömungsführungselement angeordneten, eine Dämpfkraft erzeugenden Druckbegrenzungsventile sind diesen passiven Ventilelementen hydraulisch vorgeschaltet. Bei dieser Ausführungsform sind somit in beiden Durchströmungsrichtungen jeweils zwei passive Ventilelemente hydraulisch in Reihe hintereinander geschaltet. Die beiden hintereinander in Reihe geschalteten passiven Ventilelemente weisen bevorzugt unterschiedliche Öffnungsdrücke auf.

Erfindungsgemäß ist vorgesehen, dass das erste und das zweite Dämpfungsventil jeweils ein Rückschlagventil aufweist, wobei durch die Rückschlagventile sichergestellt wird, dass das erste Dämpfungsventil nur bei einer Einfahrbewegung und das zweite Dämpfungsventil nur bei einer Ausfahrbewegung der Kolbenstange von der Dämpfungsflüssigkeit durchströmt wird. Bevorzugt weist jedes kontinuierlich verstellbare Dämpfungsventil ein passives Ventilelement auf, das in Ventildurchströmungsrichtung dem Stellventil hydraulisch vorgeschaltet ist, wobei in Durchströmungsrichtung gesehen jedem passiven Ventilelement ein Rückschlagventil hydraulisch vorgeschaltet ist. Diese Rückschlagventile können als einfache Scheibenventile ausgebildet sein, die bei ihrer Durchströmung keine nennenswerte Dämpfungskraft erzeugen. Durch diese Rückschlagventile wird verhindert, dass bei geöffneten Stellventilen die Dämpfungsventile in der jeweils nicht gewollten Richtung von der Dämpfungsflüssigkeit durchströmt werden können.

Im Folgenden wird die Erfindung anhand einer Zeichnung näher erläutert. Im Einzelnen zeigen
Fig. 1 einen Axialschnitt durch einen erfindungsgemäßen Schwingungsdämpfer,
Fig. 2 einen Axialschnitt durch ein Rucksackventil nach einer ersten Ausführungsform der Erfindung,
Fig. 3 einen Axialschnitt durch ein Rucksackventil nach einer zweiten Ausführungsform der Erfindung,
Fig. 4 ein hydraulisches Ersatzschaubild der erfindungsgemäßen Ventilanordnung nach Fig. 2,
Fig. 5 ein hydraulisches Ersatzschaubild der erfindungsgemäßen Ventilanordnung nach Fig. 3

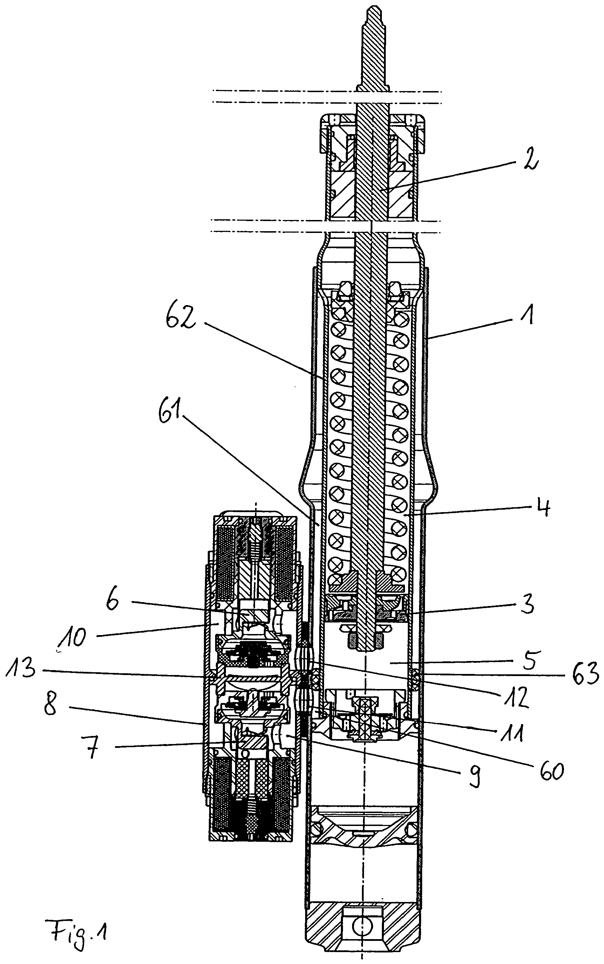

In Fig. 1 ist ein erfindungsgemäßer Schwingungsdämpfer mit an dem Dämpferrohr 1 angebrachtem Rucksackventil dargestellt. Der Schwingungsdämpfer weist ein Dämpferrohr 1 und eine oszillierend in das Dämpferrohr 1 ein- und ausfahrbare Kolbenstange 2 auf. An dem einen Ende der Kolbenstange 2 ist ein Arbeitskolben 3 befestigt, der den Dämpferrohrinnenraum in einen kolbenstangenseitigen Arbeitsraum 4 und einen kolbenstangenfernen Arbeitsraum 5 unterteilt. Das Rucksachventil weist ein Gehäuse 8 auf, in das zwei kontinuierlich verstellbare Dämpfungsventile 6, 7 integriert sind. Über diese Dämpfungsventile kann die Dämpfkraft des Schwingungsdämpfers in der Zugstufe und in der Druckstufe getrennt und unabhängig voneinander eingestellt werden.

Die Dämpfungsventile 6, 7 sind über ein Strömungsumlenkungselement 13 miteinander hydraulisch gekoppelt. Die genaue Arbeitsweise des erfindungsgemäßen Rucksackventils wird weiter unten erläutert.

Bei dem in Fig. 1 dargestellten Schwingungsdämpfer handelt es sich um einen Dämpfer, der nach dem Einkammer-Wirkprinzip arbeitet. Daher ist unterhalb des Arbeitskolbens 3 auch ein Bodenventil vorhanden. Die Erfindung ist jedoch auch für Dämpfer geeignet, die nach dem Zweikammer-Wirkprinzip arbeiten.

Die Zuleitung der Dämpfungsflüssigkeit erfolgt bei einer Einfahrbewegung der Kolbenstange über die Strömungszuleitung 60 und bei einer Ausfahrbewegung der Kolbenstange über die Strömungszuleitung 61. Die Strömungszuleitungen 60, 61 werden durch ein in das Dämpferrohr 1 eingesetztes Rohr 62 gebildet und sie sind über ein Dichtungselement 63 gegeneinander abgedichtet.

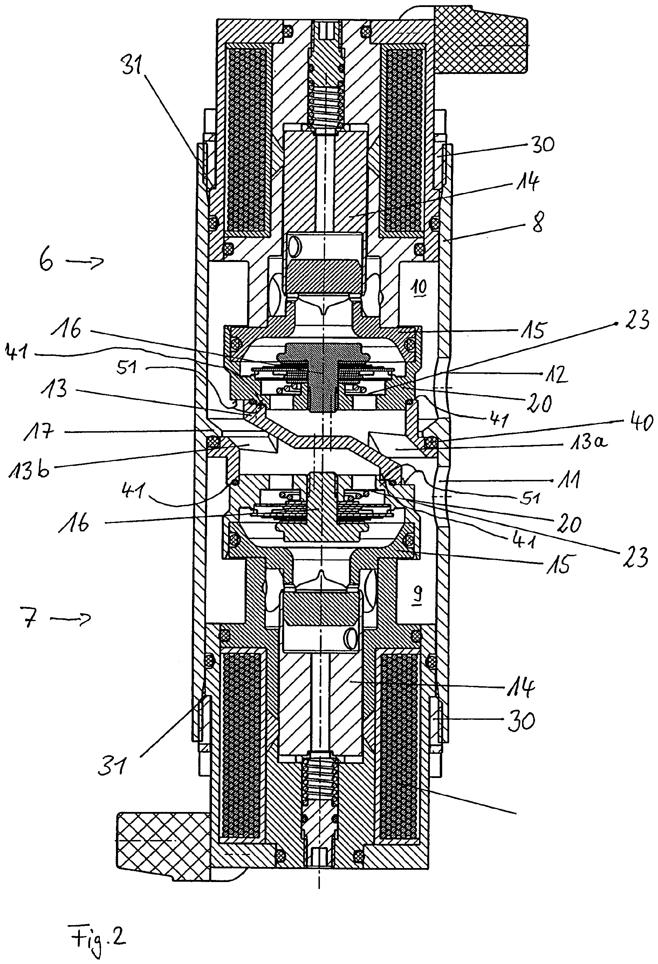

Fig. 2 zeigt einen gegenüber Fig. 1 um 90° verdrehten Axialschnitt eines erfindungsgemäßen Rucksackventiles, bei dem das Gehäuse 8 zylindrisch ausgebildet ist. Das Gehäuse 8 weist zwei Anschlussbohrungen 11,12 auf, über die die Hydraulikräume 9,10 mit den Arbeitsräumen des Schwingungsdämpfers verbunden sind. Das Gehäuse 8 weist einen radialen Absatz 17 auf, an welchem sich das Strömungsführungselement 13 abstützt. Das Strömungsführungselement 13 ist zwischen zwei Ventilkörpern 20 verspannt.

In dem Gehäuse 8 sind zwei Dämpfungsventile 6,7 angeordnet. Die beiden Dämpfungsventile 6,7 sind gleich aufgebaut. Das erste Dämpfungsventil 6 ist in Fig. 2 oberhalb des Strömungsführungselementes 13 angeordnet, während das zweite Dämpfungsventil 7 in der Darstellung gemäß Fig. 2 unterhalb des Strömungsführungselementes 13 angeordnet ist. Beide Dämpfungsventile 6,7 umfassen einen Stellschieber 14, der mit dem zylindrischen Teil eines durchströmbaren Umlenkelementes 15 zusammenwirkt. In dem Mantel des zylindrischen Teils des Umlenkelementes 15 sind ein oder mehrere Drosselöffnungen vorgesehen, die durch den hohlzylindrischen Teil des Stellschiebers 14 entweder ganz verschlossen, teilweise überdeckt oder komplett freigegeben werden können, je nachdem, welche axiale Position der Stellschieber 14 einnimmt.

Werden die Drosselöffnungen durch den Stellschieber 14 ganz verschlossen, so ist das parallel zu dem Arbeitskolben 3 des Schwingungsdämpfers angeordnete Dämpfungsventilen 6,7 für die Dämpfungsflüssigkeit nicht durchströmbar. In diesem Fall muss die Dämpfkraft des Schwingungsdämpfers über die Dämpfkrafterzeugungseinrichtungen des Arbeitskolbens 3 erzeugt werden. Werden die Drosselöffnungen dagegen ganz oder teilweise von dem Stellschieber 14 freigegeben, so wird beim Durchströmen der Drosselöffnungen eine Dämpfkraft erzeugt. Je geringer der Durchflussquerschnitt der Drosselöffnungen ist, desto größer ist die erzeugte Dämpfkraft.

Um den Stellschieber 14 axial verschieben zu können ist eine elektromagnetische Antriebseinrichtung 60 vorgesehen, die in an sich bekannter Weise den als Anker ausgebildeten Stellschieber 14 über einen vorgegebenen Verstellweg kontinuierlich verstellen kann. Auf diese Weise kann jeder gewünschte Durchflussquerschnitt der Drosselöffnungen und damit jede gewünschte Dämpfkraft eingestellt werden.

Erfindungsgemäß ist vorgesehen, dass das erste Dämpfungsventil 6 und das zweite Dämpfungsventil 7 jeweils ein Rückschlagventil 23 aufweist, wobei durch die Rückschlagventile 23 sichergestellt wird, dass das erste Dämpfungsventil 6 nur bei einer Einfahrbewegung und das zweite Dämpfungsventil 7 nur bei einer Ausfahrbewegung der Kolbenstange 2 von der Dämpfungsflüssigkeit durchströmt wird. Jedes kontinuierlich verstellbare Dämpfungsventil 6, 7 weist ein passives Ventilelement 16 auf, das in Ventildurchströmungsrichtung dem Stellventil 14, 15 hydraulisch vorgeschaltet ist, wobei in Durchströmungsrichtung gesehen jedem passiven Ventilelement 16 ein Rückschlagventil 23 hydraulisch vorgeschaltet ist. Diese Rückschlagventile 23 können als einfache Scheibenventile ausgebildet sein, die bei ihrer Durchströmung keine nennenswerte Dämpfungskraft erzeugen. Durch diese Rückschlagventile 23 wird verhindert, dass bei geöffneten Stellventilen 24 (Stellschieber 14, Umlenkelement 15) die Dämpfungsventile 6, 7 in der jeweils nicht gewollten Richtung von der Dämpfungsflüssigkeit durchströmt werden können.

Das erfindungsgemäße Rucksackventil arbeitet wie folgt:
Bei einer Einfahrbewegung der Kolbenstange 2, das heißt bei einem Eintauchen der Kolbenstange 2 in das Dämpferrohr 1, drückt der Arbeitskolben 3 Dämpfungsflüssigkeit aus dem kolbenstangenfernen Arbeitsraum 5 über die Bohrung 11 in den ersten Hydraulikraum 9. Von diesem ersten Hydraulikraum 9 strömt die Dämpfungsflüssigkeit durch einen Kanal 13a des Strömungsführungselementes 13. Über den Kanal 13a wird die Dämpfungsflüssigkeit einem passiven Dämpfungselement 16 des ersten Dämpfungsventiles 6 zugeleitet, das eine von der Strömungsgeschwindigkeit der Dämpfungsflüssigkeit abhängige Dämpfkraft erzeugt. Über das passive Dämpfungselement 16 strömt die Dämpfungsflüssigkeit in ein Umlenkungselement 15 des ersten Dämpfungselementes 6 ein. In dem zylindrischen Teil des Umlenkungselementes 15, auf dem der hohlzylindrische Teil des Stellschiebers 14 axial geführt ist, wird die Strömung nach radial außen umgelenkt. Dabei durchströmt die Dämpfungsflüssigkeit den vom Stellschieber 14 freigegebenen Durchflussquerschnitt der Drosselöffnungen und tritt in den zweiten Hydraulikraum 10 ein. Aus dem zweiten Hydraulikraum 10 strömt die Dämpfungsflüssigkeit dann durch die zweite Bohrung 12 in den kolbenstangenseitigen Arbeitsraum 4.

Bei einer Ausfahrbewegung der Kolbenstange 2 drückt der Arbeitskolben 3 Dämpfungsflüssigkeit aus dem kolbenstangenseitigen Arbeitsraum 4 durch die Bohrung 12 in denen zweiten Hydraulikraum 10. Von diesem zweiten Hydraulikraum 10 strömt die Dämpfungsflüssigkeit durch einen Kanal 13b des Strömungsführungselementes 13. Über diesen Kanal 13b wird die Dämpfungsflüssigkeit einem passiven Dämpfungselement 16 des zweiten Dämpfungselementes 7 zugeleitet, das eine von der Strömungsgeschwindigkeit der Dämpfungsflüssigkeit abhängige Dämpfkraft erzeugt. Über das passive Dämpfungselement 16 strömt die Dämpfungsflüssigkeit in ein Umlenkungselement 15 des zweiten Dämpfungselementes 7 ein. In dem zylindrischen Teil des Umlenkungselementes 15, auf dem der hohlzylindrische Teil des Stellschiebers 14 axial geführt ist, wird die Strömung nach radial außen umgelenkt. Dabei durchströmt die Dämpfungsflüssigkeit den vom Stellschieber 14 freigegebenen Durchflussquerschnitt der Drosselöffnungen und tritt in den ersten Hydraulikraum 9 ein. Aus dem ersten Hydraulikraum 9 strömt die Dämpfungsflüssigkeit dann durch die erste Bohrung 11 in den kolbenstangenfernen Arbeitsraum 5.

Das Strömungsumlenkungselement 13 trennt die beiden Hydraulikräume 9,10 somit hydraulisch voneinander und stellt mit den Kanälen 13a, 13b eine korrekte zentrale Anströmung der Dämpfungsventile 6,7 sicher.

Das Strömungsumlenkungselement 13 ist im dargestellten Ausführungsbeispiel als Sinterbauteil ausgebildet.

Die gesamte Anordnung aus den Dämpfungsventilen 6,7 und dem Strömungsumlenkungselement 13 ist durch zwei Schraubringe 30 verspannt. Jeder Schraubring 30 weist ein Außengewinde auf, mit dem er in ein entsprechendes Innengewinde am inneren Umfang des Gehäuses 8 eingeschraubt wird. Über einen radialen Absatz 31 übertragen die Schraubringe 30 eine in axialer Richtung wirkende Kraft auf die jeweiligen Dämpfungsventile 6,7. Auf diese Weise werden beide Dämpfungsventile 6,7 mit einer axialen Spannkraft gegen das Strömungsumlenkungselement 13 verspannt.

Zwischen dem Strömungsumlenkungselement 13 und dem radialen Absatz 17 des Gehäuses 8 ist ein Dichtungselement 40 vorgesehen. Dieses Dichtungselement 40 ist als einfache O-Ring Dichtung ausgebildet. Darüber hinaus weist das Strömungsumlenkungselement 13 Dichtflächen 41 auf, die sich dichtend an Gegenflächen 51 der Ventilkörper 20 der Dämpfungsventile 6,7 abstützen. Durch das Dichtungselement 40 und die Dichtflächen 41 des Strömungsumlenkungselementes 13 sind die Hydraulikräume 9,10 hydraulisch dicht gegeneinander abgedichtet. So kann auf konstruktiv einfache Weise eine getrennte zentrale Anströmung des jeweils richtigen Dämpfungsventils 6,7 während einer Einfahrbewegung bzw. Ausfahrbewegung der Kolbenstange 2 sichergestellt werden. Eine Fehlfunktion ist aufgrund der Verwendung des fest installierten Strömungsumlenkungselementes - anders als bei ebenfalls denkbaren schaltbaren Strömungsumlenkungselementen - nicht möglich. Durch das einmal montierte Strömungsumlenkungselement 13 ist in jedem Bewegungszustand des Arbeitskolbens 3 der Kolbenstange 2 gewährleistet, dass das in dem jeweiligen Bewegungszustand wirksame Dämpfungsventil 6,7 korrekt angeströmt wird.

Jedes Ventilelement 16 umfasst ein Rückschlagventil 23, das in Ventildurchströmungsrichtung öffnet und in entgegen gesetzter Richtung schließt. Durch diese Rückschlagventile wird sichergestellt, dass jedes Dämpfungsventil 6, 7 nur in einer festgelegten Durchströmungsrichtung durchströmt werden kann. Strömt die Dämpfungsflüssigkeit beispielsweise durch die Anschlussbohrung 11 in den Hydraulikraum 9 ein und ist das durch den Stellschieber 14 und das Umlenkelement 15 gebildete Stellventil 24 des zweiten Dämpfungsventils 7 geöffnet, so verhindert das dem zweiten Dämpfungsventil 7 zugeordnete Rückschlagventil 23, dass das Dämpfungsventil 7 von der Dämpfungsflüssigkeit durchströmt wird und stellt sicher, dass das erste Dämpfungsventil 6 in Durchströmungsrichtung durchströmt wird. Analog verhält es sich, wenn die Dämpfungsflüssigkeit durch die Anschlussbohrung 12 in den Hydraulikraum 10 einströmt. In diesem Fall stellt das dem ersten Dämpfungsventil 6 zugeordnete Rückschlagventil 23 die korrekte Durchströmung der Ventilanordnung sicher.

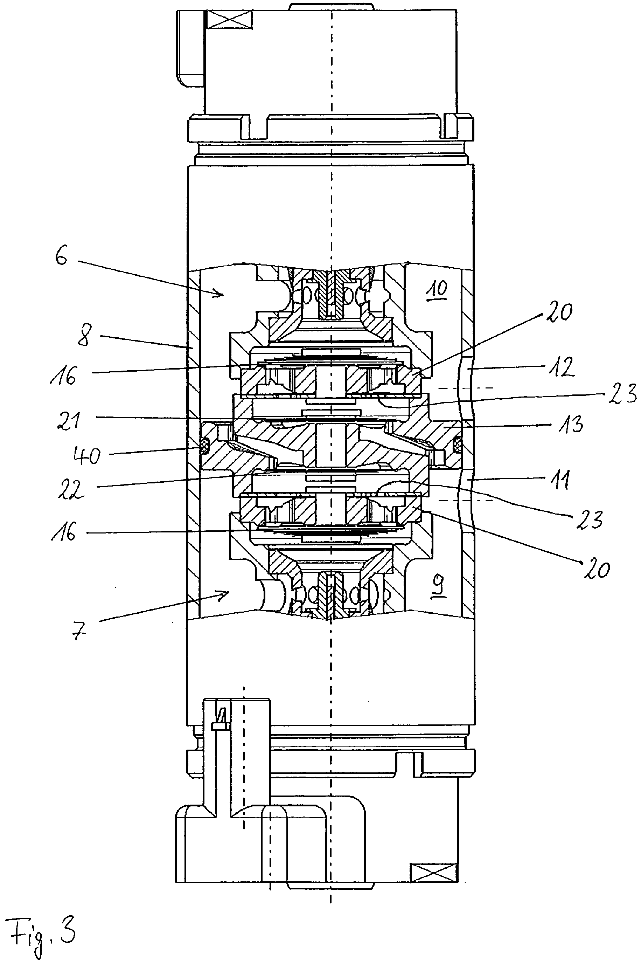

Bei dem in Fig. 2 dargestellten Ausführungsbeispiel bewirkt das Strömungsführungselement 13, dass die Dämpfungsflüssigkeit den Dämpfungsventilen 6, 7 zugeleitet wird. Gemäß einer in Fig. 3 dargestellten Ausführungsform der Erfindung besitzt das Strömungsführungselement 13 noch eine zusätzliche Funktion, nämlich eine Dämpfungskraft zu erzeugen. Gemäß der in Fig. 3 dargestellten Ausführungsform weist das Strömungsführungselement 13 mindestens zwei Kanäle 13a, 13b zur Durchströmung mit Dämpfungsflüssigkeit auf, und an dem Strömungsführungselement 13 sind Druckbegrenzungsventile 21, 22 angeordnet, wobei das eine Druckbegrenzungsventil 21 von durch den einen Kanal 13a und das andere Druckbegrenzungsventil 22 von durch den anderen Kanal 13b strömender Dämpfungsflüssigkeit beaufschlagbar ist. Somit sind den passiven Ventilelementen 16 der Dämpfungsventile 6, 7 weitere passive Ventilelemente in Gestalt der Druckbegrenzungsventile 21, 22 vorgeschaltet, durch welche der Verlauf der Dämpfkraftkennlinien des Schwingungsdämpfers beeinflussbar ist.

Das an dem Strömungsführungselement 13 angeordnete jeweilige passive Druckbegrenzungsventil 21, 22 ist so ausgelegt, dass es bei einem geringeren Druck (d.h. bei einer geringeren Strömungsgeschwindigkeit der Dämpfungsflüssigkeit) öffnet als das in Durchströmungsrichtung gesehen dahinter liegende passive Ventilelement 16. Die Druckbegrenzungsventile dienen somit zur Beeinflussung der Dämpfkraftkennlinien in einem Bereich geringerer Kolbenstangengeschwindigkeiten, während die passiven Ventilelemente 16 zur Beeinflussung der Dämpfkraftkennlinien im Bereich größerer Kolbenstangengeschwindigkeiten dienen.

Bei der Ausführungsform gemäß Fig. 2 sind die passiven Ventilelemente 16 als zweistufige vorgespannte Druckbegrenzungsventile ausgebildet. Dies hat den Nachteil, dass es schwierig ist, die Vorspannung der Ventilscheiben der zweiten Druckbegrenzungsstufe exakt einzustellen, denn die Toleranzen der aufeinander liegenden Ventilscheiben, die zwischen der innersten Stützfläche (die vom Fachmann auch als Nabenfläche bezeichnet wird) und der äußersten Stützfläche angeordnet sind, addieren sich auf, so dass die Gefahr besteht, dass die gewünschte Vorspannkraft der Ventilscheiben der zweiten Druckbegrenzungskurve entweder nicht erreicht oder überschritten wird. In beiden Fällen wirkt sich dies negativ auf die beabsichtigte Dämpfungskennlinienbeeinflussung aus.

Ein großer Vorteil der Ausführungsform gemäß Fig. 3 gegenüber der gemäß Fig. 2 besteht darin, dass sowohl für die Druckbegrenzungsventile 21, 22 als auch für die Druckbegrenzungsventile 16 das jeweilige Vorspannmaß der Ventilscheiben, d.h. das Maß, mit dem die Ventilscheiben vorgespannt sind, sehr exakt eingestellt werden kann. Das Vorspannmaß ist der Niveauunterschied in axialer Richtung zwischen der inneren Stützfläche und der äußeren Stützfläche (vom Fachmann auch als Steuerkante bezeichnet). Dieses Vorspannmaß kann bei der Ausführungsform nach Fig. 3 deshalb sehr exakt eingestellt werden, weil es bei der Herstellung des Strömungsführungselements 13 bzw. bei der Herstellung der Ventilkörper 20 unmittelbar erzeugt werden kann. Sind das Strömungsführungselement 13 und die Ventilkörper 20 als Sinterbauteile ausgebildet, so wird das Vorspannmaß durch das Sinterwerkzeug vorgegeben. Sind die Bauteile als Blechteile ausgebildet, so wird das Vorspannmaß z.B. durch eine spanende Bearbeitung (Drehen, Fräsen) erzeugt. Die Ventilscheiben der zweiten Druckbegrenzungsstufe, d.h. die Ventilscheiben der Ventilelemente 16, sind direkt zwischen der inneren und der äußeren Stützfläche vorgespannt. D.h. die innere Stützfläche, auf der sich die Ventilscheibe der zweiten Druckbegrenzungsstufe abstützt, wird nicht (wie bei der Ausführungsform nach Fig. 2) durch aufeinander liegende Ventilscheiben gebildet, sondern durch den Ventilkörper 20 selbst, so dass es zu der vorstehend erwähnten Aufaddierung der Einzeltoleranzen der Ventilscheibendicken nicht kommen kann.

Vorteilhaft an der Ausführungsform gemäß Fig. 3 ist weiterhin, dass sowohl die Ventilkörper 20 als auch das Strömungsführungselement 13 als einfache Sinterbauteile kostengünstig hergestellt werden können. Bei der in Fig. 3 dargestellten Ausgestaltung des Strömungsführungselements 13 kann außerdem auf den in Fig. 2 vorhandenen radialen Absatz 17 verzichtet werden, so dass ein einfaches und kostengünstigeres Rohr als Gehäuse 8 verwendet werden kann und die Abdichtung der Hydraulikräume 9, 10 gegeneinander über eine am Außenumfang des Strömungsführungselements 13 in einer Nut angeordnete O-Ring-Dichtung 40 erfolgt.

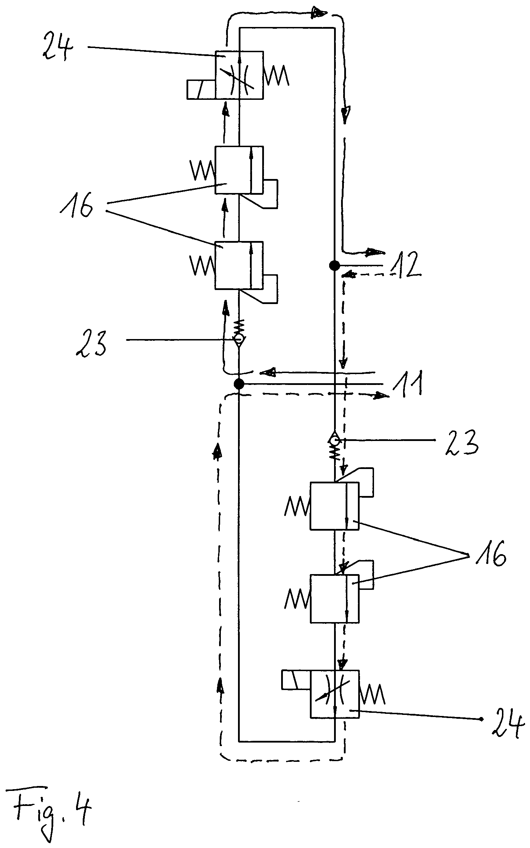

Fig. 4 zeigt ein hydraulisches Ersatzschaubild der erfindungsgemäßen Ventilanordnung gemäß Fig. 2. Die Anschlussbohrungen 11, 12 sind schematisch dargestellt. Es ist gut zu erkennen, dass die Rückschlagventile 23 eine Durchströmung jedes Dämpfungsventils 6, 7 in nur einer Durchströmungsrichtung sicherstellen. Die Durchströmungsrichtung für eine Einfahrbewegung der Kolbenstange (Druckrichtung) ist mit durchgezogenen Pfeilen angedeutet, während die Durchströmungsrichtung für eine Ausfahrbewegung der Kolbenstange (Zugrichtung) mit gestrichelten Pfeilen angedeutet ist. In der jeweiligen Durchströmungsrichtung gesehen hinter dem Rückschlagventil 23 ist das zweistufige Druckbegrenzungsventil 16 angeordnet, das wiederum dem kontinuierlich verstellbaren Stellventil 24 vorgeschaltet ist.

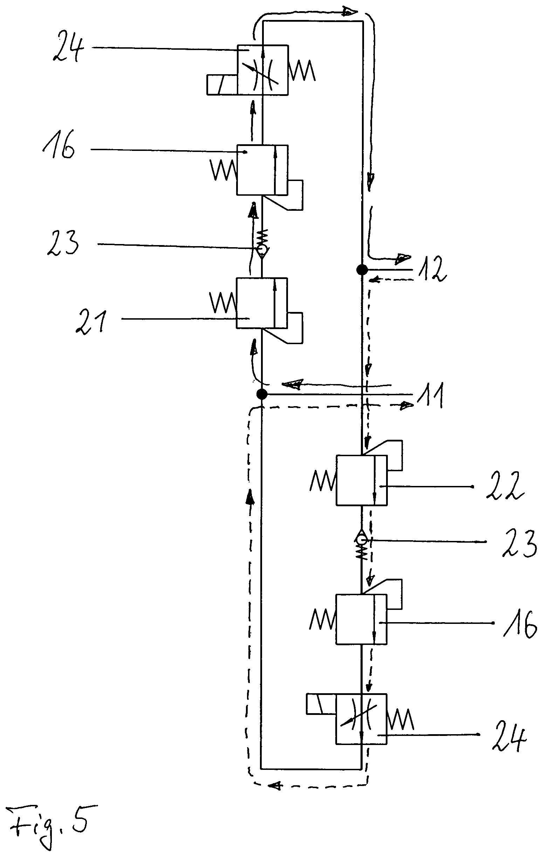

Fig. 5 zeigt ein hydraulisches Ersatzschaubild der erfindungsgemäßen Ventilanordnung gemäß Fig. 3. Bei der Ventilanordnung nach Fig. 5 ist dem Rückschlagventil 23 in Durchströmungsrichtung gesehen ein erstes passives Druckbegrenzungsventil 21, 22 vorgeschaltet. Hinter dem Rückschlagventil 23 ist ein zweites passives Druckbegrenzungsventil 16 angeordnet. Die Druckbegrenzungsventile 21, 22, und 16 sind als einstufige Druckbegrenzungsventile ausgebildet, d.h. sie öffnen jeweils bei einem einzigen vorgebbaren Öffnungsdruck. In Durchströmungsrichtung gesehen hinter dem zweiten passiven Druckbegrenzungsventil 16 ist das kontinuierlich verstellbare Stellventil 24 angeordnet.

## Patentansprüche

1. Hydraulischer Schwingungsdämpfer
a) mit einem zumindest teilweise mit Dämpfungsflüssigkeit gefüllten Dämpferrohr (1),
b) einer oszillierend in das Dämpferrohr (1) ein- und ausfahrbaren Kolbenstange (2),
c) einem an der Kolbenstange (2) befestigten Arbeitskolben (3), der den Dämpferrohrinnenraum in einen kolbenstangenseitigen (4) und einen kolbenstangenfernen Arbeitsraum (5) aufteilt,
d) und mit einem ersten und einem zweiten, hydraulisch parallel zum Arbeitskolben (3) angeordneten und an dem Dämpferrohr (1) befestigten Dämpfungsventil (6, 7) mit kontinuierlich verstellbarer Dämpfkraft,
e) wobei das erste Dämpfungsventil (6) nur bei einer Einfahrbewegung und das zweite Dämpfungsventil (7) nur bei einer Ausfahrbewegung der Kolbenstange (2) von der Dämpfungsflüssigkeit durchströmt wird,
**dadurch gekennzeichnet, dass**
jedes Dämpfungsventil (6, 7) ein passives Ventilelement (16) aufweist, das in Ventildurchströmungsrichtung dem Stellventil (24) hydraulisch vorgeschaltet ist, wobei in Durchströmungsrichtung gesehen jedem Ventilelement (16) ein Rückschlagventil (23) hydraulisch vorgeschaltet ist, wobei durch die Rückschlagventile sichergestellt wird, dass das erste Dämpfungsventil (6) nur bei einer Einfahrbewegung der und das zweite Dämpfungsventil (7) nur bei einer Ausfahrbewegung der Kolbenstange (2) von der Dämpfungsflüssigkeit durchströmt wird,
f) dass beide Dämpfungsventile (6, 7) in einem gemeinsamen Gehäuse (8) mit einem ersten (9) und einem zweiten Hydraulikraum (10) angeordnet sind,
g) dass der erste Hydraulikraum (9) über eine erste Bohrung (11) mit dem kolbenstangenfernen Arbeitsraum (5) und der zweite Hydraulikraum (10) über eine zweite Bohrung (12) mit dem kolbenstangenseitigen Arbeitsraum (4) verbunden ist,
h) und dass ein Strömungsführungselement (13) vorgesehen ist, durch welches die beiden Hydraulikräume (9, 10) voneinander derart getrennt sind, dass die in den ersten Hydraulikraum (9) bei einer Einfahrbewegung der Kolbenstange (2) einströmende Dämpfungsflüssigkeit dem ersten Dämpfungsventil (6) in Ventildurchströmungsrichtung zugeleitet wird, und die bei einer Ausfahrbewegung der Kolbenstange (2) in den zweiten Hydraulikraum (10) einströmende Dämpfungsflüssigkeit dem zweiten Dämpfungsventil (7) in Ventildurchströmungsrichtung zugeleitet wird.

2. Schwingungsdämpfer nach Anspruch 1, **dadurch gekennzeichnet, dass** die Dämpfungsventile (6, 7) als elektromagnetisch betätigbare, kontinuierlich verstellbare Stellventile ausgebildet sind.

3. Schwingungsdämpfer nach Anspruch 2, **dadurch gekennzeichnet, dass** die Dämpfungsventile (6, 7) hohlzylindrische Stellschieber (14) aufweisen, die auf einem zylindrischen Teil eines durchströmbaren Umlenkungselementes (15) geführt sind.

4. Schwingungsdämpfer nach einem der Ansprüche 1 bis 3, **dadurch gekennzeichnet, dass** zumindest eines der Dämpfungsventile (6, 7) ein passives Ventilelement (16) aufweist, das in Ventildurchströmungsrichtung dem Stellventil (24) hydraulisch vorgeschaltet ist.

5. Schwingungsdämpfer nach einem der voranstehenden Ansprüche, **dadurch gekennzeichnet, dass** das Strömungsführungselement (13) als Sinterbauteil ausgebildet ist.

6. Schwingungsdämpfer nach einem der voranstehenden Ansprüche, **dadurch gekennzeichnet, dass** das Gehäuse (8) zylindrisch ausgebildet ist.

7. Schwingungsdämpfer nach einem der voranstehenden Ansprüche, **dadurch gekennzeichnet, dass** die Dämpfungsventile (6, 7) koaxial zueinander in dem Gehäuse (8) angeordnet sind.

8. Schwingungsdämpfer nach einem der voranstehenden Ansprüche, **dadurch gekennzeichnet, dass** das Strömungsführungselement (13) koaxial zu den Dämpfungsventilen (6, 7) und zwischen diesen angeordnet ist.

9. Schwingungsdämpfer nach einem der voranstehenden Ansprüche, **dadurch gekennzeichnet, dass** die die Dämpfungsventile (6,7) und das Strömungsführungselement (13) umfassende Anordnung in dem Gehäuse (8) gegeneinander verspannt angeordnet ist.

10. Schwingungsdämpfer nach Anspruch 9, **dadurch gekennzeichnet, dass** zwei Schraubringe (30) vorgesehen sind, die mit dem Gehäuse (8) verschraubt sind und die Absätze (31) aufweisen, über die gegeneinander gerichtete, die Verspannung der Anordnung bewirkende Spannkräfte in axialer Richtung auf die Dämpfungsventile (6, 7) übertragen werden.

11. Schwingungsdämpfer nach einem der voranstehenden Ansprüche, **dadurch gekennzeichnet, dass** die beiden Dämpfungsventile (6, 7) baugleich sind.

12. Schwingungsdämpfer nach einem der voranstehenden Ansprüche, **dadurch gekennzeichnet, dass** das Strömungsführungselement (13) mindestens zwei Kanäle (13a, 13b) zur Durchströmung mit Dämpfungsflüssigkeit aufweist und dass an dem Strömungsführungselement (13) Druckbegrenzungsventile (21, 22) angeordnet sind, wobei das eine Druckbegrenzungsventil (21) von durch den einen Kanal (13a) und das andere Druckbegrenzungsventil (22) von durch den anderen Kanal (13b) strömender Dämpfungsflüssigkeit beaufschlagbar ist.

13. Schwingungsdämpfer nach Anspruch 12, **dadurch gekennzeichnet, dass** die Druckbegrenzungsventile (21, 22) als Scheibenventile ausgebildet sind.

14. Schwingungsdämpfer nach Anspruch 12 oder 13, **dadurch gekennzeichnet, dass** jedes der Dämpfungsventile (6, 7) ein passives Ventilelement (16) aufweist, und dass die Druckbegrenzungsventile (21, 22) den passiven Ventilelementen (16) hydraulisch vorgeschaltet sind.

## Claims

1. Hydraulic vibration damper
a) having a damper tube (1) which is filled at least partially with damping liquid,
b) a piston rod (2) which can be retracted into and extended out of the damper tube (1) in an oscillating manner,
c) a working piston (3) which is fastened to the piston rod (2) and divides the damper tube interior space in a working space (4) on the piston rod side and a working space (5) which is remote from the piston rod,
d) and having a first and a second damping valve (6, 7) with a continuously adjustable damping force, which damping valves (6, 7) are arranged hydraulically parallel to the working piston (3) and are fastened to the damper tube (1),
e) the first damping valve (6) being flowed through by the damping liquid only in the case of a retraction movement, and the second damping valve (7) being flowed through by the damping liquid only in the case of an extension movement of the piston rod (2),
**characterized in that**
each damping valve (6, 7) has a passive valve element (16) which is connected hydraulically upstream of the actuating valve (24) in the valve throughflow direction, a check valve (23) being connected hydraulically upstream of each valve element (16) as viewed in the throughflow direction, the check valves ensuring that the first damping valve (6) is flowed through by the damping liquid only in the case of a retraction movement of the, and the second damping valve (7) is flowed through by the damping liquid only in the case of an extension movement of the piston rod (2),
f) **in that** the two damping valves (6, 7) are arranged in a common housing (8) with a first (9) and a second hydraulic space (10),
g) **in that** the first hydraulic space (9) is connected via a first bore (11) to the working space (5) which is remote from the piston rod, and the second hydraulic space (10) is connected via a second bore (12) to the working space (4) on the piston rod side,
h) and **in that** a flow guiding element (13) is provided, by way of which the two hydraulic spaces (9, 10) are separated from one another in such a way that the damping liquid which flows into the first hydraulic space (9) in the case of a retraction movement of the piston rod (2) is fed to the first damping valve (6) in the valve throughflow direction, and the damping liquid which flows into the second hydraulic space (10) in the case of an extension movement of the piston rod (2) is fed to the second damping valve (7) in the valve throughflow direction.

2. Vibration damper according to Claim 1, **characterized in that** the damping valves (6, 7) are configured as electromagnetically actuable, continuously adjustable actuating valves.

3. Vibration damper according to Claim 2, **characterized in that** the damping valves (6, 7) have hollow-cylindrical actuating slides (14) which are guided in a cylindrical part of a deflection element (15), through which flow can pass.

4. Vibration damper according to one of Claims 1 to 3, **characterized in that** at least one of the damping valves (6, 7) has a passive valve element (16) which is connected hydraulically upstream of the actuating valve (24) in the valve throughflow direction.

5. Vibration damper according to one of the preceding claims, **characterized in that** the flow guiding element (13) is configured as a sintered component.

6. Vibration damper according to one of the preceding claims, **characterized in that** the housing (8) is of cylindrical configuration.

7. Vibration damper according to one of the preceding claims, **characterized in that** the damping valves (6, 7) are arranged in the housing (8) coaxially with respect to one another.

8. Vibration damper according to one of the preceding claims, **characterized in that** the flow guiding element (13) is arranged coaxially with respect to the damping valves (6, 7) and between the latter.

9. Vibration damper according to one of the preceding claims, **characterized in that** the arrangement which comprises the damping valves (6, 7) and the flow guiding element (13) is arranged in the housing (8) in a manner which is braced against one another.

10. Vibration damper according to Claim 9, **characterized in that** two ring nuts (30) are provided which are screwed to the housing (8) and which have shoulders (31), via which tensioning forces which are directed counter to one another and bring about the bracing action of the arrangement are transmitted to the damping valves (6, 7) in the axial direction.

11. Vibration damper according to one of the preceding claims, **characterized in that** the two damping valves (6, 7) are structurally identical.

12. Vibration damper according to one of the preceding claims, **characterized in that** the flow guiding element (13) has at least two channels (13a, 13b) for the throughflow with damping liquid, and **in that** pressure relief valves (21, 22) are arranged on the flow guiding element (13), it being possible for the one pressure relief valve (21) to be loaded by damping liquid which flows through the one channel (13a) and for the other pressure relief valve (22) to be loaded by damping liquid which flows through the other channel (13b).

13. Vibration damper according to Claim 12, **characterized in that** the pressure relief valves (21, 22) are configured as disc valves.

14. Vibration damper according to Claim 12 or 13, **characterized in that** each of the damping valves (6, 7) has a passive valve element (16), and **in that** the pressure relief valves (21, 22) are connected hydraulically upstream of the passive valve elements (16).

## Revendications

1. Amortisseur hydraulique de vibrations
a) comportant un tuyau d'amortisseur (1) au moins partiellement rempli de liquide d'amortissement,
b) une tige de piston (2) pouvant rentrer en oscillant dans le tuyau d'amortisseur (1) et en sortir en oscillant,
c) un piston fonctionnel (3) fixé à la tige de piston (2) et qui divise l'intérieur du tuyau d'amortisseur en un espace fonctionnel (5) situé côté tige de piston (4) et un autre espace fonctionnel situé à distance de la tige de piston,
d) et une première et une seconde soupape d'amortissement (6, 7) disposées au niveau hydraulique parallèlement au piston fonctionnel (3) et fixées au tuyau d'amortisseur (1) avec une force d'amortissement réglable en continu,
e) la première soupape d'amortissement (6) n'étant parcourue par le liquide d'amortissement qu'en cas de mouvement d'entrée et la seconde soupape d'amortissement (7) qu'en cas de mouvement de sortie de la tige de piston (2),
**caractérisé en ce que**
chaque soupape d'amortissement (6, 7) présente un élément de soupape passif (16) qui est branché au niveau hydraulique en amont de la soupape de réglage (24) dans le sens d'irrigation de la soupape, vue dans le sens d'irrigation, une soupape anti-retour (23) étant branchée au niveau hydraulique en amont de chaque élément de soupape (16), les soupapes antiretour garantissant que la première soupape d'amortissement (6) n'est parcourue par le liquide d'amortissement qu'en cas de mouvement d'entrée de la et la seconde soupape amortissement (7) qu'en cas d'un mouvement de sortie de la tige de piston (2),
f) que les deux soupapes d'amortissement (6, 7) sont disposées dans un boîtier commun (8) doté d'une première (9) et d'une seconde (10) chambre hydraulique,
g) que la première chambre hydraulique (9) est connectée par un premier trou (11) à l'espace fonctionnel distant de la tige de piston (5) et la seconde chambre hydraulique (10) par un second trou (12) à l'espace fonctionnel (4) situé côté tige de piston,
h) et qu'il est prévu un élément de guidage d'écoulement (13) par lequel les deux chambres hydrauliques (9,10) sont séparées l'une de l'autre de manière à ce que le liquide d'amortissement affluant dans la première chambre hydraulique (9), en cas de mouvement d'entrée de la tige de piston (2), soit conduit vers la première soupape d'amortissement (6) dans le sens d'irrigation de la soupape et que le liquide d'amortissement affluant dans la seconde chambre hydraulique (10), en cas de mouvement de sortie de la tige de piston (2), soit conduit vers la seconde soupape d'amortissement (7) dans le sens d'irrigation de la soupape.

2. Amortisseur de vibrations selon la revendication 1, **caractérisé en ce que** les soupapes d'amortissement (6, 7) sont réalisées sous la forme de soupapes de réglage à actionnement électromagnétique réglables en continu.

3. Amortisseur de vibrations selon la revendication 2, **caractérisé en ce que** les soupapes d'amortissement (6, 7) présentent des curseurs de réglage cylindriques creux (14) qui sont guidés sur une partie cylindrique d'un élément d'inversion (15) pouvant être parcouru par un écoulement.

4. Amortisseur de vibrations selon une des revendications 1 à 3, **caractérisé en ce qu'**au moins une des soupapes d'amortissement (6, 7) présente un élément de soupape passif (16) qui est installé au niveau hydraulique en amont de la soupape de réglage (24) dans le sens d'irrigation de la soupape.

5. Amortisseur de vibrations selon une des revendications précédentes, **caractérisé en ce que** l'élément de guidage d'écoulement (13) est réalisé sous la forme d'une pièce frittée.

6. Amortisseur de vibrations selon une des revendications précédentes, **caractérisé en ce que** le boîtier (8) a une conformation cylindrique.

7. Amortisseur de vibrations selon une des revendications précédentes, **caractérisé en ce que** les soupapes d'amortissement (6, 7) sont disposées coaxialement l'une par rapport à l'autre dans le boîtier (8).

8. Amortisseur hydraulique de vibrations selon une des revendications précédentes, **caractérisé en ce que** l'élément de guidage d'écoulement (13) est disposé coaxialement par rapport aux soupapes d'amortissement (6, 7) et entre celles-ci.

9. Amortisseur de vibrations selon une des revendications précédentes, **caractérisé en ce que** l'agencement comprenant les soupapes d'amortissement (6, 7) et l'élément de guidage d'écoulement (13) est disposé dans le boîtier (8) en étant serré contre celui-ci.

10. Amortisseur de vibrations selon la revendication 9, **caractérisé en ce qu'**il est prévu deux anneaux filetés (30) qui sont vissés au boîtier (8) et qui présentent des talons (31) par lesquels des forces de serrage dirigées l'une contre l'autre et provoquant le serrage de l'agencement sont transmises dans le sens axial aux soupapes d'amortissement (6, 7).

11. Amortisseur de vibrations selon une des revendications précédentes, **caractérisé en ce que** les deux soupapes d'amortissement (6, 7) sont de structure identique.

12. Amortisseur de vibrations selon une des revendications précédentes, **caractérisé en ce que** l'élément de guidage d'écoulement (13) présente au moins deux canaux (13a, 13b) destinés à être parcourus par du liquide d'amortissement et **en ce que** les soupapes de limitation de pression (21,22) sont disposées au niveau de l'élément de guidage d'écoulement (13), la soupape de limitation de pression (21) pouvant être sollicitée par le liquide d'amortissement s'écoulant dans le canal (13a) et l'autre soupape de limitation de pression (22) par le liquide d'amortissement s'écoulant dans l'autre canal (13b) .

13. Amortisseur de vibrations selon la revendication 12, **caractérisé en ce que** les soupapes de limitation de pression (21,22) sont réalisées sous forme de vannes papillons.

14. Amortisseur de vibrations selon la revendication 12 ou 13, **caractérisé en ce que** chacune des soupapes d'amortissement (6, 7) présente un élément de soupape passif (16) et **en ce que** les soupapes de limitation de pression (21, 22) sont installées au niveau hydraulique en amont des éléments de soupape passifs (16).
